# EUROPEAN PATENT SPECIFICATION

(11) **EP 2 196 380 B1**
(45) Date of publication and mention of the grant of the patent: **03.08.2011**
(21) Application number: 09176216.1
(22) Date of filing: 17.11.2009
(51) Int. Cl.: B62D 9/00

(54) **Tractor with a wider steering angle**
Traktor mit einem größeren Lenkwinkel
Tracteur doté d'un angle de direction plus large

(30) Priority: 11.12.2008 IT MI20082193
(43) Date of publication of application: 16.06.2010
(73) Proprietor: BCS S.p.A., 20123 Milano (MI) (IT)
(72) Inventor: Castoldi, Fabrizio, 20145, Milano (MI) (IT)
(74) Representative: Branca, Emanuela

(56) References cited:
- EP-A- 1 108 569
- EP-A- 1 396 358

## Description

The present invention refers to a tractor with a wider steering angle.

The tractor, or agricultural tractor, is generally a motorised vehicle used to pull a trailer or to attach specific farming equipment.

Indeed, tractors belong to the family of self-propelled agricultural machines, of which it constitutes the hauling component.

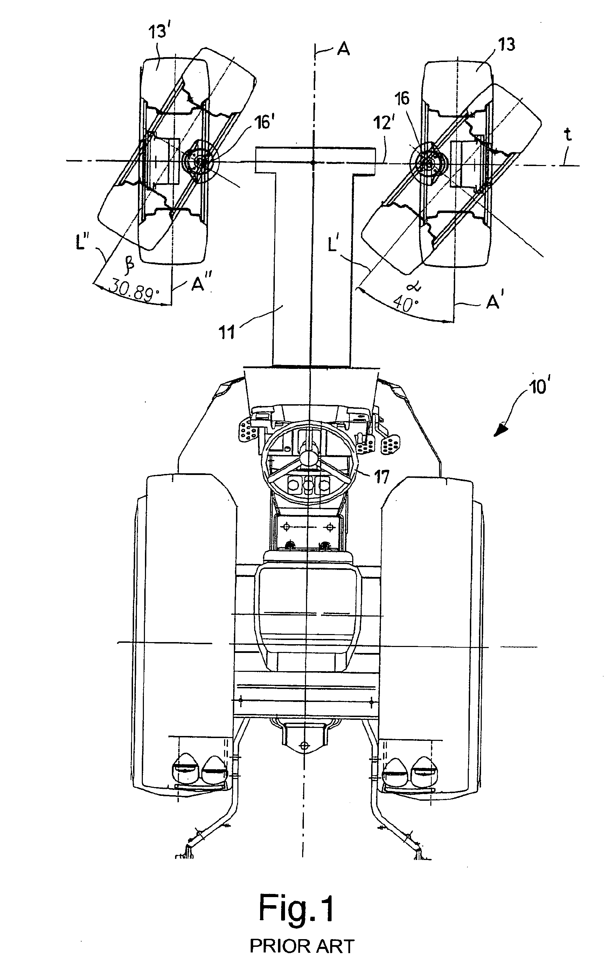

As schematically shown in figure 1 these particular self-propelled agricultural machines now usually comprise a frame 11 with longitudinal extension along a central axis of symmetry A, which represents the minimum bulk of the motor, a front steering axle 12 connected at the front to the frame 11 and a pair of steered wheels 13, 13' associated with opposite ends of the front axle 12 to allow the tractor 10' to follow curvilinear trajectories.

Generally, such tractors 10' also comprise means for controlling the steering of the steered wheels 13, 13', i.e. devices suitable for varying the spatial orientation of the wheels 13, 13' with respect to the front axle 12, and means for interconnecting the steered wheels 13, 13' to operatively couple the rotation thereof.

Indeed, during steering both of the steered wheels 13, 13' have to be directed in the same direction creating different angles between their steered longitudinal axis L' L " and the axes A' A" parallel to the axis A of the tractor 10' translated into the centre of the relative wheels 13, 13'. Indeed, as can be seen in figure 1, it is required that during steering the inner wheel describes an angle α*, defined between the longitudinal axis L' of the inner wheel 13 and the axis A' parallel to the axis A of the tractor 10' translated into the centre of the wheel 13, that is greater than the angle β* defined between the longitudinal axis L" of the outer wheel 13' and the axis A" parallel to the axis A of the tractor 10' translated into the centre of the wheel 13'.

In this way, a single momentary centre of rotation of the two steered wheels 13, 13' is identified, allowing the tractor 10' to easily follow curvilinear trajectories, i.e. without skidding and bumping along.

However, such known tractors 10' described above have some drawbacks that become particularly evident during curvilinear paths in which the wheels 13, 13' need to be steered a long way.

It should be noted that such a condition, unlike what occurs for vehicles used in urban environments in which a large steering angle is unlikely to be needed, occurs quite frequently in farming in which obstacles often have to be avoided or it is necessary to change between forward and reverse in small manoeuvring spaces.

In these frequent cases, in which maximum steering is needed, the rotation of the wheels, and in particular of the inner wheel, is limited by the bulk of the frame/motor which the inner wheel comes up against during steering.

In known tractors, therefore, the maximum steering of the inner wheel is limited to the rotation that takes the inner wheel up to the frame.

In order to avoid this restriction, i.e. to increase the permitted steering, there are various solutions on the market that, nevertheless, have some drawbacks.

One known solution consists of equipping the tractor with a front axle arranged in advanced position with respect to the motor so as to give more free space for steering the wheels kept in advanced fixed position away from the motor.

Another known solution, again to give more free space to steer the wheels, consists of equipping the tractor with a front axle that is longer than usual, keeping the wheels in a fixed lateral position away from the motor.

However, disadvantageously, such solutions, which actually increase the steering angles of the wheels, also considerably increase the total bulk of the tractor.

Indeed, in the first case there is an increase in pitch and in the second case there is an increase in track.

It is clear that, since there are usually only small spaces available for manoeuvring, the increase in total bulk of the tractor does not correspond to a solution to be preferably adopted.

Another solution currently known is the one described in many patents, such as EP0691257, US5297648, EP0634315, US5046577, EP0446043, US5129477 and EP0597515, in which, in order to offer a wider steering angle, it is foreseen for the front axle to be of the type that rotates with respect to the frame about a vertical pin. Furthermore document EP 1 396 358 A2 discloses the preamble of claim 1.

In such embodiments, in a synchronised manner the axle is able to rotate with respect to the frame arranging the wheels in a condition steered further with respect to the axis of the tractor.

However, such a solution has drawbacks such as complex constructive kinematics of the structure that supports the axle at the frame.

A further drawback of such machines with the front axle rotating with respect to the frame is the fact that, in order to ensure the aforementioned rotation, the axle must necessarily be arranged in a very advanced position at the front with respect to the frame/motor to avoid it being the axle itself that runs into the aforementioned frame/motor.

Also in these machines, therefore, the pitch cannot be contained but instead the total bulk of the tractor is necessarily increased, contrary to what is really wanted for machines intended to steer around small manoeuvring spaces.

A further drawback of such machines is that which occurs, in particular with large steering angles, with the rotation movement about the vertical pin of the axle arranged in advanced position where there is a consequent displacement of the outer wheel up to and beyond the axis of the machine.

Indeed, in these cases the stability of the vehicle is drastically reduced due to the displacement of the barycentre, with the possibility of tipping over, towards the outside of the bend with respect to the points of contact of the rear wheels with the front ones, with a further reduction in stability on sloping ground.

The purpose of the present invention is to make a tractor with a wider steering angle that is able to solve the aforementioned drawbacks of the prior art in an extremely simple, cost-effective and particularly functional manner.

Another purpose is to make a compact tractor with a wider steering angle that is able to follow curvilinear trajectories even in small manoeuvring spaces and that has a minimum total bulk having minimum pitch and track.

These purposes according to the present invention are accomplished by making a tractor with a wider steering angle as outlined in claim 1.

Further characteristics of the invention are outlined by the subsequent claims.

The characteristics and advantages of a tractor with a wider steering angle according to the present invention shall become clearer from the following description, given as an example and not for limiting purposes, referring to the attached schematic drawings, in which:
figure 1 is a schematic view from above of a known tractor;
figure 2 is a schematic view from above of a tractor with a wider steering angle according to the present invention;
figures 3 and 4 schematically show a first embodiment of a front steering axis of a tractor with a wider steering angle according to the present invention;
figures 5 and 6 schematically show a second embodiment of a front steering axis of a tractor with a wider steering angle according to the present invention;
figures 7, 8 and 9 schematically show a third embodiment of a front steering axis of a tractor with a wider steering angle according to the present invention;
figures 10 and 11 schematically show a fourth embodiment of a front steering axis of a tractor with a wider steering angle according to the present invention.

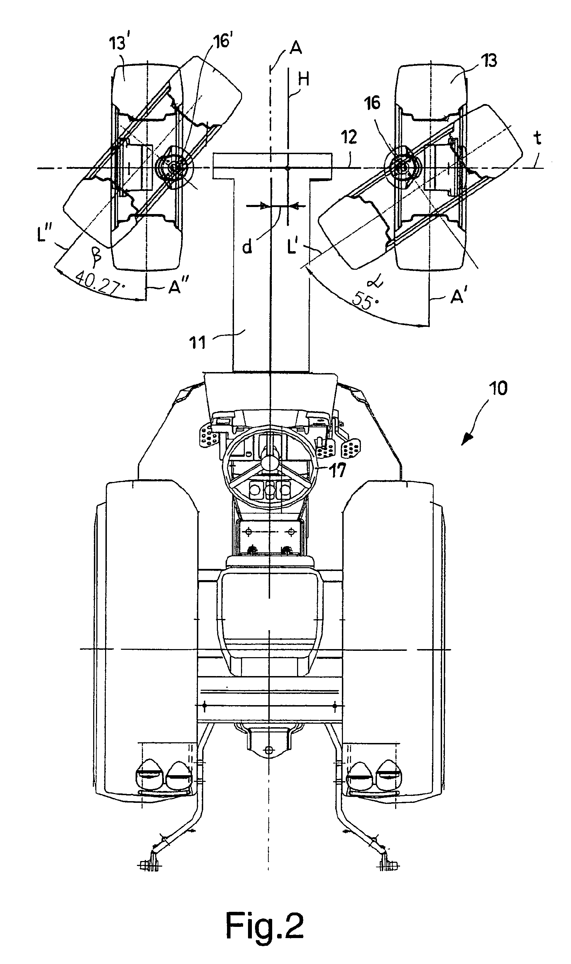

With reference to figures 2-11, a tractor with a wider steering angle according to the present invention is shown with 10 whereas in figure 1 a currently known tractor with low steering angle is shown with 10'.

As can be seen in figure 2 the tractor 10 with wider steering angle of the present invention comprises a frame 11, a front steering axle 12 orthogonal to the frame 11, means for connecting the front axle 12 to the frame 11, a pair of steered wheels 13, 13' associated with opposite ends of the front axle 12, means for steering the aforementioned steered wheels 13, 13' with respect to the front axle 12 and means for interconnecting the same steered wheels 13, 13' to couple the rotation thereof.

In particular, according to the invention the means for connecting the front axle 12 to the frame 11 comprise means for translating the front axle 12 itself with respect to the frame 11 in a direction T orthogonal to the longitudinal axis A of the frame 11.

In this way, as can be seen in figure 2 and according to kinematics that are synchronised or sequential with respect to the steering of the wheels that will be described hereafter, the axle 12 is able to move lateraly with respect to the frame 11, in particular in the direction of the inner steered wheel 13, 13', arranging the wheel 13, 13' on the inside of the bend that is being turned in a condition farther away from the frame 11 with respect to that taken up with the axle 12 centred.

Advantageously, as can be seen in figure 2 with reference to figure 1, the inner wheel 13, 13' is in a position farther from the frame 11 for a portion d thus allowing it to have a wider steering angle without running into the motor or the frame 11 of the tractor 10.

Moreover, advantageously, the tractor 10 is very compact, i.e. it needs neither increase in pitch (indeed the axle does not rotate and thus does not risk to run into the frame 11), nor particular increase in track that could also compromise travel in a straight line due to the excessive lateral bulk of the tractor 10.

Indeed, according to the invention when travelling in a straight line the axle 12 automatically takes up its original position again pulling the wheel 13, 13' that had previously been taken away to make cornering easier back towards the frame 11.

The wider steering angle permitted is highlighted in figure 2 where, during steering, the inner wheel 13 describes an angle α, defined between the longitudinal axis of the wheel 13 on the inside L' and the axis A' parallel to the axis A of the tractor 10 located in the centre of the wheel 13, that is greater than that indicated with α* in figure 1 defined in the same way due to the greater distance of the inner wheel 13 from the frame 11.

Similarly, the angle β defined between the longitudinal axis of the wheel 13' on the outside L" and the axis A" parallel to the axis A of the tractor 10' located in the centre of the wheel 13' is greater than that indicated with β* in figure 1 defined in the same way.

Indeed, geometrically the angle β* could even be greater but for kinematic reasons, which will be detailed hereafter, it must be below α*.

Therefore, the rotation β of the outer wheel 13' brought up to the frame 11 is also greater than the angles β* of known tractors since they must remain smaller than α* limitated by the frame 11.

Also for the tractor 10 the angle α for steering the inner wheel 13 must be greater than the angle β of the outer wheel 13' so as to be able to identify a single momentary centre of rotation of the two wheels 13, 13' allowing the tractor 10 to easily follow curvilinear trajectories, i.e. without skidding and bumping along.

The steered wheels 13, 13' are mounted on hub-supports 14, 14' arranged at opposite ends of the front axle 12 in which the hub-supports 14, 14' are rotated on relative pins 16, 16' about substantially vertical axes 15, 15' by the steering means.

The means for interconnecting the steered wheels 13, 13' are for operative interconnection of the hub-supports 14, 14' to impart a controlled rotation to the steered wheels 13, 13' in the same direction with suitable proportions described above to identify a single momentary centre of rotation for both of the two wheels 13, 13'.

Such operative interconnection means of the steered wheels 13, 13' are connected to a steering wheel 17 for manually guiding the tractor 10 so that the user, by acting on the steering wheel 17, steers as wished.

As stated earlier, the means for translating the front axle 12 can be synchronised with the means for steering the steered wheels 13, 13'.

In this case the means for translating the front axle 12 will be actuated for each steering angle of the wheels 13, 13' with respect to the longitudinal axis A of the frame 11.

When the steering angle of the wheels 13, 13' goes to zero, i.e. travelling in a straight line, the axle 12 is pulled back into the original position centred with respect to the frame 11 pulling the wheel 13, 13' that had previously been moved away to make cornering easier back towards the frame 11 itself.

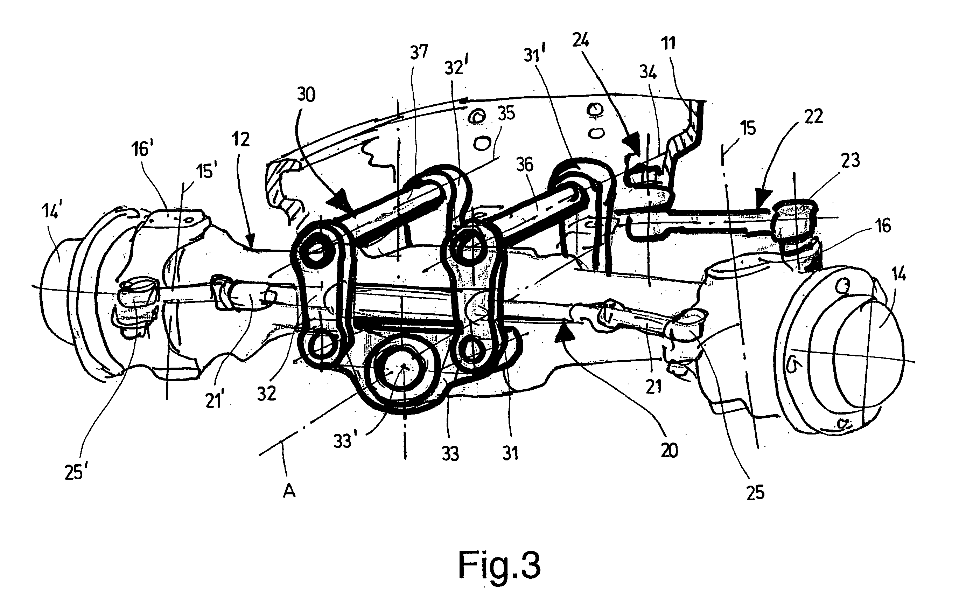

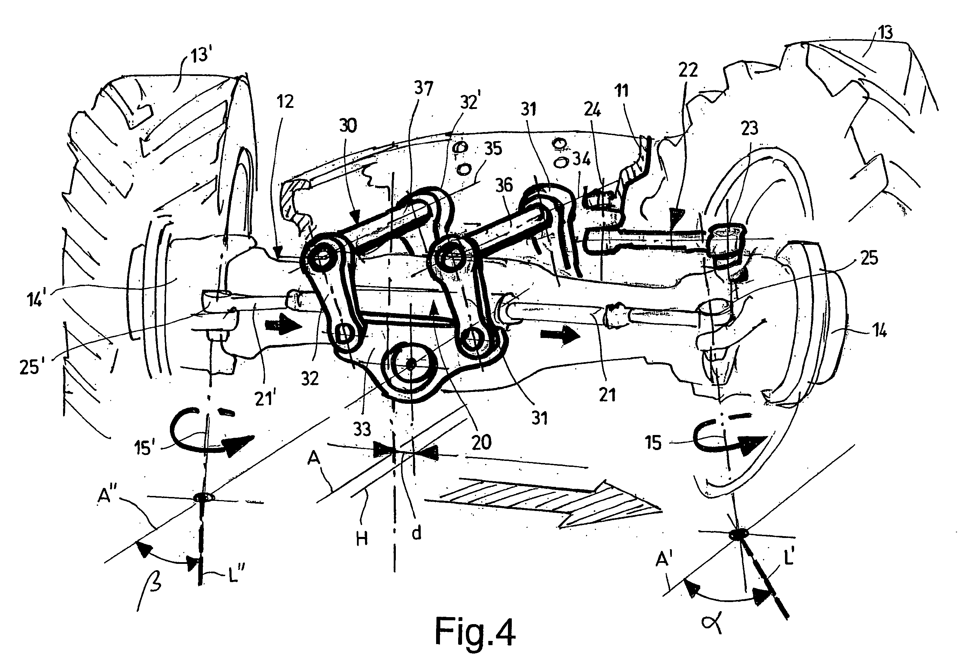

According to a first embodiment shown in figures 3 and 4 the tractor 10 can comprise a hydraulic cylinder 20 with double stem 21, 21' in which the hub-supports 14, 14' are connected to the stems 21, 21'.

In particular, such a hydraulic cylinder 20 imparts the rotations and the operative interconnection to the steered wheels 13, 13'.

Alternatively, in an embodiment that is not shown, there can be two independent hydraulic cylinders each equipped with a relative stem in which the hub-supports 14, 14' are connected to the stems to impart the rotations to the steered wheels 13, 13'.

Going back to figures 3 and 4, the stems 21, 21' are connected to the hub-supports 14, 14' through pins 25, 25' for rotating about substantially vertical axes.

Again in this embodiment the tractor 10 comprises a drag strut 22 connected at a first end to one of the hub-supports 14, 14' and at a second end to the frame 11.

The drag strut 22 is connected to the hub-support 14 or 14' and to the frame 11 through rotation pins 23, 24 with substantially vertical axes.

As can be seen in figures 3 and 4 the tractor 10 can comprise a double articulated quadrilateral structure 30 for connecting the front axle 12 with said frame 11 in which the front axle 12 is positioned between the two articulated quadrilaterals.

Each articulated quadrilateral comprises two substantially vertical connecting rods 31, 32, 31', 32' and a substantially horizontal rod-shaped element 33 that connects the bottom ends of the two connecting rods 31, 32, 31', 32'.

The rod-shaped element 33 is fixed symmetrically in the centreline of the front axle 12 and the connecting rods 31, 32, 31', 32' have top ends connected to the frame 11 through rotation pins with substantially horizontal axes 34, 35.

Such substantially horizontal pins are schematised through two substantially horizontal rods 36, 37 for connecting the top ends of the connecting rods 31, 32, 31', 32' of the two articulated quadrilaterals in which such rods 36, 37 are constrained to the frame 11 and, in rotation, to the two connecting rods 31, 32, 31', 32'.

The way in which such a first embodiment allows the axle 12 to translate orthogonally with respect to the frame 11 during the steering of the steered wheels 13, 13' is shown in figure 2.

The hydraulic cylinder 20 with double stem 21, 21' imparts a rotation on the hubs 14, 14', and thus on the wheels 13, 13', and the rotation of the hub 14 imparts the translation of the axle 12 with respect to the frame 11 in a synchronous manner, by means of the drag strut 22.

Such a translation of the axle 12 with respect to the frame 11 is permitted by the double articulated quadrilateral 30 wherein in such a steering condition the two connecting rods 31, 32, 31', 32' take up an inclined position with respect to the vertical moving axis H of the centre of the axle 12 from the axis A of the frame 11 by a lateral portion d.

Moreover, the rod-shaped element 33 is equipped with a horizontal pin 33' to allow the axle 12 to adapt to the roughness of the terrain through a rolling movement.

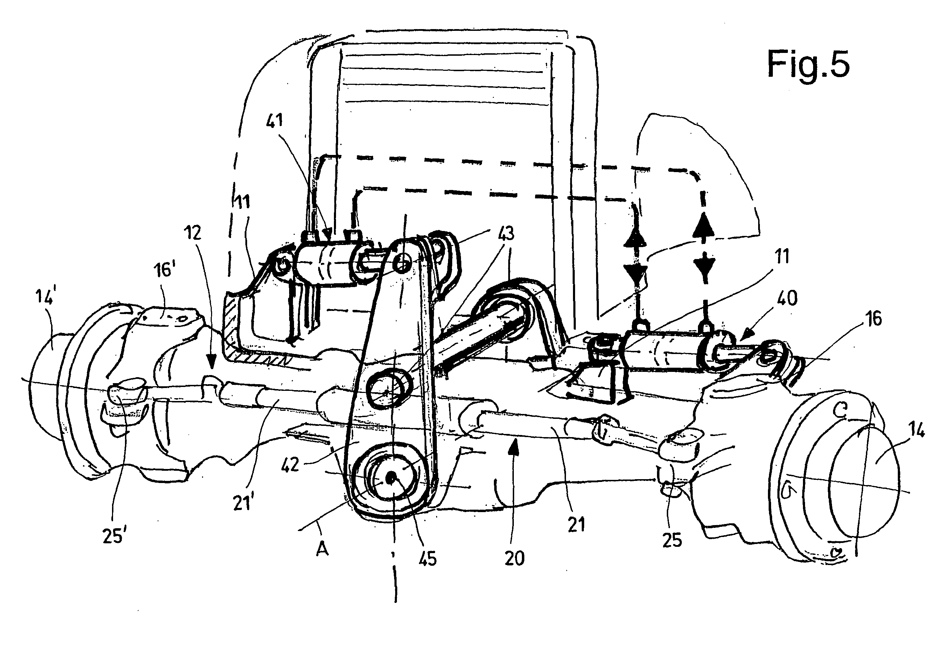

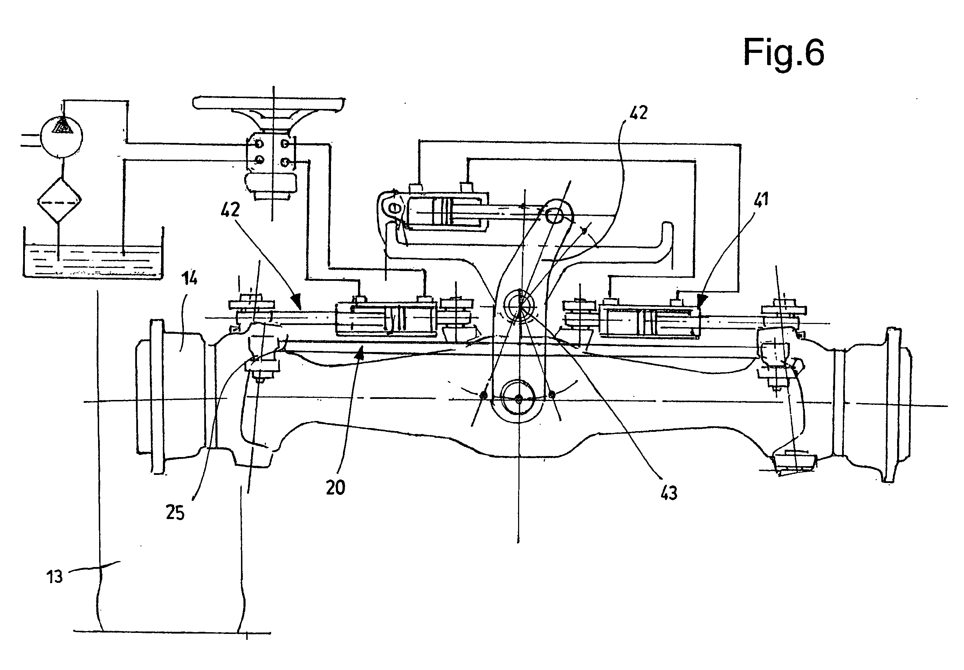

A second embodiment of the tractor 10 is shown in figures 5 and 6 and it comprises a substantially vertical rod-shaped element 42 for supporting the front axle 12 and equipped with a bottom end fixed in the centreline of the front axle 12 itself.

There is also a first and a second hydrostatic cylinder 40, 41 wherein the first hydrostatic cylinder 40 is connected on one side to one of the hub-supports 14, 14' and on the other side to the axle 12.

The second hydrostatic cylinder 41 is connected on one side to the top end of the rod-shaped element 42 and on the other side to the frame 11.

Such a rod-shaped element 42 is constrained in a rotating manner in an intermediate portion thereof to the frame 11 through a substantially horizontal pin 43 and the first and second hydrostatic cylinder 40, 41 are operatively connected to determine a synchronous rotation of the rod-shaped element 42 upon steering of the steered wheels 13, 13'.

The way in which such a second embodiment allows the axle 12 to orthogonally translate the frame 11 in a synchronous manner during the steering of the wheels 13, 13' is described hereafter.

As schematically shown in figures 5 and 6, the hydrostatic cylinders 40, 41 are hydraulically connected together so that a displacement imparted to a hydrostatic cylinder 40 determines an equivalent displacement to the other hydrostatic cylinder 41.

Thanks to the above the hydraulic cylinder 20 with double stem 21, 21' imparts a rotation to the hubs 14, 14', and thus to the wheels 13, 13', and the rotation of the hub 14 imparts a displacement to the first hydrostatic cylinder 40 which imparts a displacement to the second hydrostatic cylinder 41 in a synchronous manner.

The latter hydrostatic cylinder 41 moves the rod 42 in rotation around the substantially horizontal pin 43 and consequently there is translation of the axle 12 with respect to the frame 11.

The rod-shaped element 42 is also equipped with a horizontal pin 45 to allow the axle 12 to adapt to the roughness of the terrain through a rolling movement.

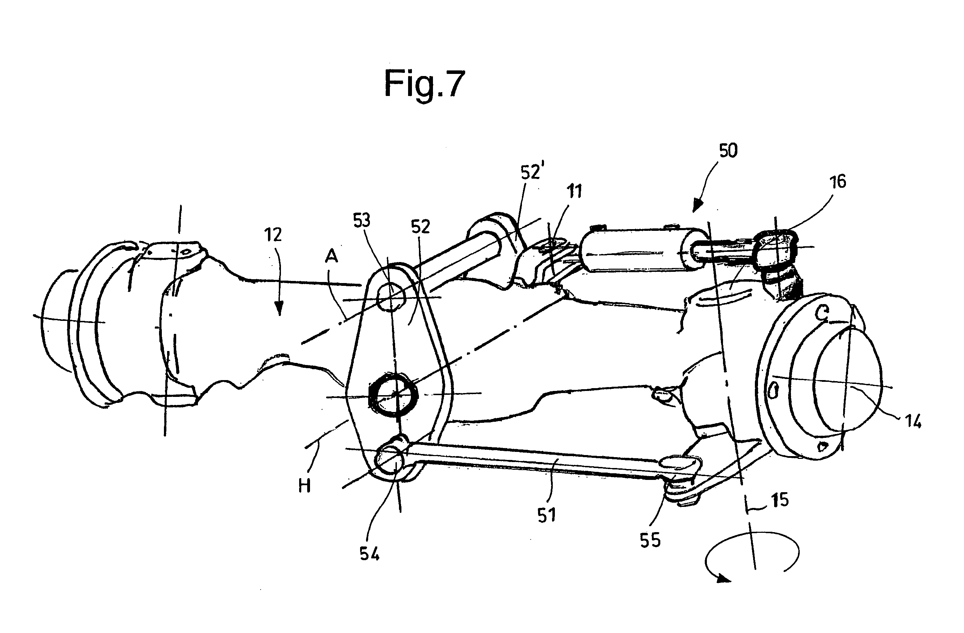

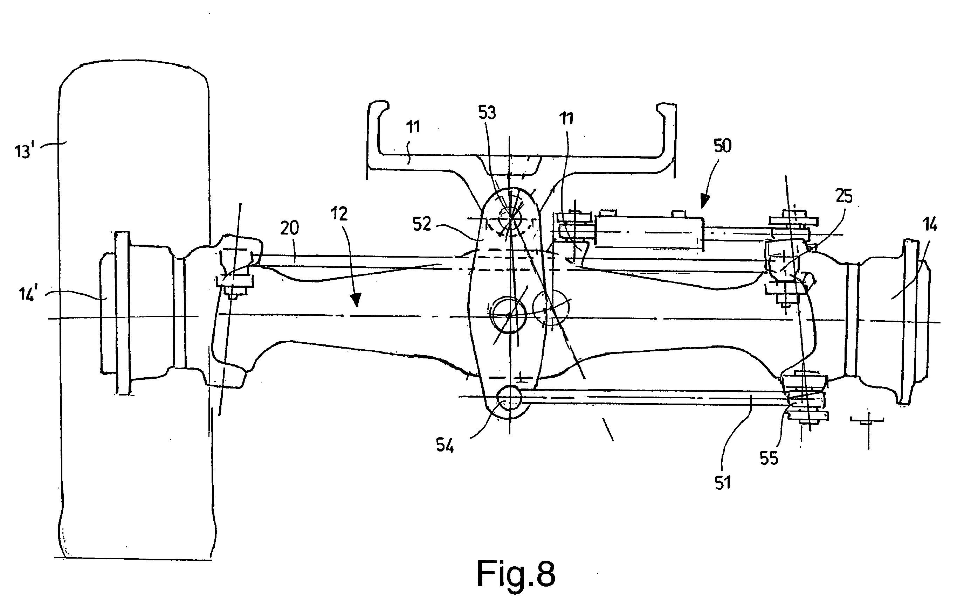

According to a third embodiment, shown in figures 7 and 8, the tractor 10 comprises a substantially vertical rod-shaped element 52 for supporting the front axle 12 constrained in a rotating manner in a top portion thereof to the frame 11 through a substantially horizontal pin 53 and equipped with an intermediate portion fixed in the centreline of the front axle 12.

In this embodiment there is a hydraulic cylinder 50 connected at one end to one of the hub-supports 14, 14' and at a second end to the axle 12 to steer the wheels 13, 13'.

A strut 51 is also foreseen connected on one side to one of the hub-supports 14, 14' and on the other side to the bottom end of the rod-shaped element 52.

Such a strut 51 is in particular rotatingly connected to the hub-support 14, 14' through a substantially vertical pin 55 and to the rod-shaped element 52 through a substantially horizontal pin 54.

This embodiment also imparts a translation that is synchronous to the steering of the wheels to the axle 12.

Indeed, the hydraulic cylinder 50 imparts the steering to the hub 14 which acts in movement on the rod 52 that by rotating around the substantially horizontal pin 54 determines the movement of the rod 52 with respect to the centre of the pin 53 and therefore the movement of the axle 12 in lateral translation with respect to the frame 11.

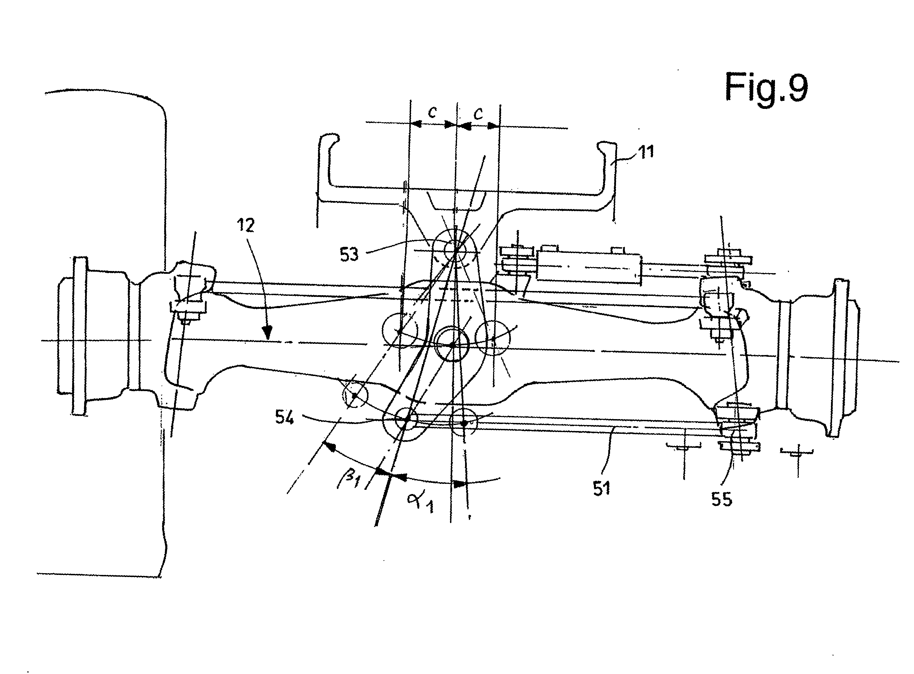

Particular shapings of the bottom end of the rod 52 where the strut 51 is connected, embodiment visible in figure 9, can be foreseen in order to balance the value of the translation of the axle in steering to the right and left.

According to the present invention, as an alternative to the embodiments described up to now, it is also possible to foresee for the means for translating the front axle 12 to be of the sequential type with respect to the means for steering the steered wheels 13, 13' and able to be actuated only once a certain steering angle α' of the wheels 13, 13' has been passed with respect to the longitudinal axis A of the frame 11.

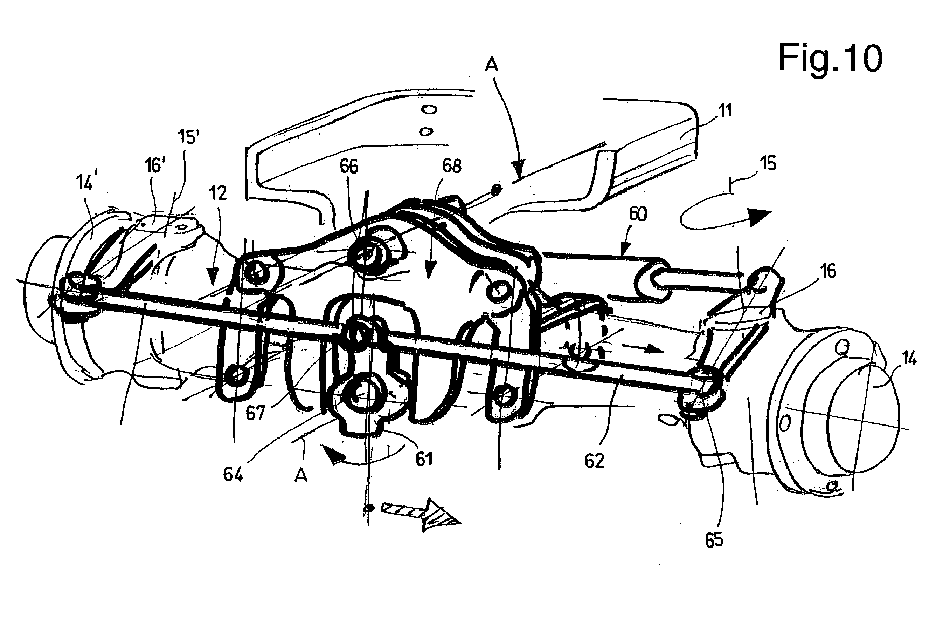

An embodiment of a tractor 10 of this last type can be seen in figures 10-11 which comprises a hydraulic cylinder 60 connected on one side to one of the hub-supports 14, 14' and on the other side to the frame 11.

There is also a substantially horizontal rod-shaped element 62 that interconnects the two hub-supports 14, 14' and that is connected roughly in the centreline of the front axle 12 with a cam 61 rotating around a horizontal pin 64.

Such a cam 61 is in contact laterally with a structure 68 for supporting the front axle 12 rotatingly constrained in a top portion thereof with respect to the frame 11 through a substantially horizontal pin 66.

In particular, such a cam 61 is shaped so as to impart upon the front axle 12 a translation movement with respect to the structure 68 for supporting the axle itself, only once a steering angle α' of the wheels 13, 13' has been passed with respect to the longitudinal axis A of the frame 11.

The rod-shaped element 62 is rotatingly connected to one of the hub-supports 14, 14' through a substantially vertical pin 65 and to the cam 61 through a substantially horizontal pin 67.

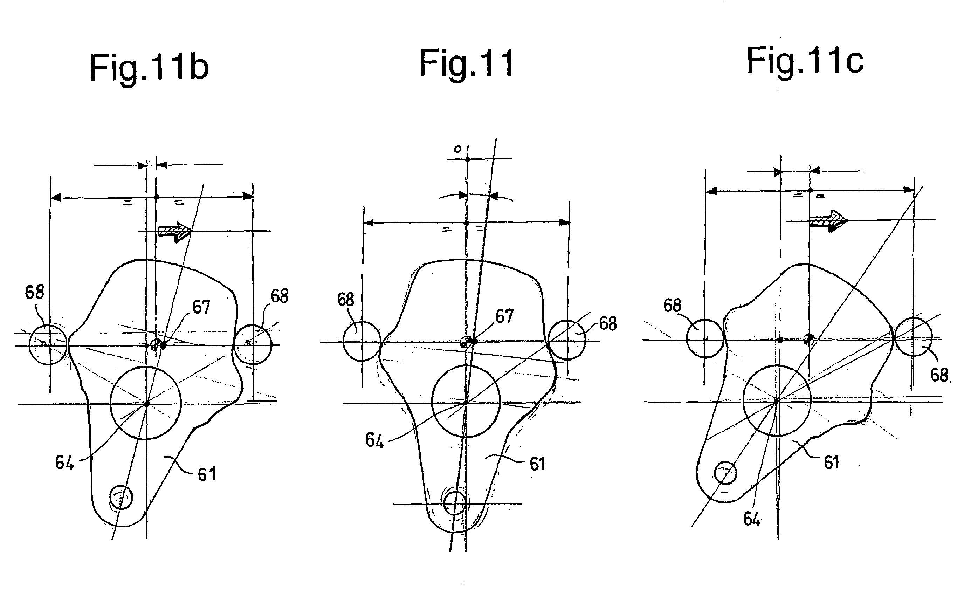

As can be seen in figures 11-11c, the cam 61 for small steering angles of the wheels 13, 13', figure 11, does not displace the axle 12 with respect to the support structure 68 and thus with respect to the axis of the machine, whereas as the steering angle of the wheels 13, 13' significantly increases, figure 11b, the axle 12 starts to translate up to the point where wide steering angles of the wheels 13, 13' are reached, figure 11c, which correspond to large translations of the front axle 12.

This last embodiment is particularly advantageous in view of the ease of driving that it gives to the tractor 10.

Indeed, in such machines 10 small corrections of the steering wheel 17 during travel in a straight line, which usually occurs at fairly high speeds, do not cause a translation of the axle 12 that, due to the aforementioned high speed, could cause excessive driving sensitivity.

It is absolutely easy to understand how the tractor with a wider steering angle object of the invention operates.

The tractor 10 with a wider steering angle described above comprises a frame 11 with longitudinal axis A, a front steering axle 12 orthogonal to the frame 11, a pair of steered wheels 13, 13' associated with opposite ends of the front axle 12, means for steering the steered wheels 13, 13' with respect to the front axle 12 and means for interconnecting the steered wheels 13, 13' to couple the rotation thereof.

In particular, the means for connecting the front axle 12 to the frame 11 of the tractor 10 comprise means for translating the front axle 12 with respect to the frame 11 in a direction T orthogonal to the longitudinal axis A of the frame 11, i.e. along the direction of the axle itself 12.

In this way, in synchronised or sequential form with respect to the steering of the wheels 13, 13', the axle 12 is able to translate laterally with respect to the frame 11, in particular in the direction of the inner wheel 13, 13', arranging such an inner wheel 13, 13' in a condition of wider possible steering angle with respect to that which can be achieved with the axle 12 not translated and centred in the frame 11.

Indeed, as can be seen in figure 2 with reference to figure 1, the inner wheel 13, 13' is advantageously farther from the motor/frame 11 thus allowing it to have a wider steering angle without running into the motor/frame 11 of the tractor 10.

It has thus been seen that a tractor with a wider steering angle according to the present invention achieves the purposes highlighted earlier.

Indeed, the tractor with a wider steering angle as described in the present invention is able to follow curvilinear trajectories even in small manoeuvring spaces, keeping a compact shape and equipped with a minimum total bulk without any increase in pitch and track with respect to known tractors.

The tractor with a wider steering angle of the present invention thus conceived can undergo numerous modifications and variants, all of which are covered by the same inventive concept; moreover, all of the details can be replaced with technically equivalent elements. In practice, the materials used, as well as their sizes, can be whatever according to the technical requirements.

## Claims

1. Tractor (10) with a wider steering angle comprising a frame (11), a front steering axle (12), means for connecting said front axle (12) to said frame (11), a pair of steered wheels (13, 13') associated to opposite ends of said front axle (12), means for steering said steered wheels (13, 13') with respect to said front axle (12) and means for interconnecting said steered wheels (13, 13') to couple the rotation thereof, **characterised in that** means for connecting said front axle (12) to said frame (11) comprise means for translating said front axle (12) with respect to said frame (11) in a direction (T) orthogonal to the longitudinal axis (A) of said frame (11).

2. Tractor (10) according to claim 1 **characterised in that** said steered wheels (13, 13') are mounted on hub-supports (14, 14') arranged at opposite ends of said front axle (12), said hub-supports (14, 14') being rotated on relative pins (16, 16') around substantially vertical axes (15, 15') by said means for steering said steered wheels (13, 13') with respect to said front axle (12), said means for interconnecting said steered wheels (13, 13') being for operative interconnection of said hub-supports (14, 14') to induce a controlled rotation in the same direction to said steered wheels (13, 13'), said interconnection means being connected to a steering wheel (17) for guiding said tractor (10) manually.

3. Tractor (10) according to claim 1 **characterised in that** said means for translating said front axle (12) are synchronised with said means for steering said steered wheels (13, 13') with respect to said front axle (12) and actuated for each steering angle of said steered wheels (13, 13') with respect to said longitudinal axis (A) of said frame (11).

4. Tractor (10) according to claim 3 **characterised in that** it comprises a hydraulic cylinder (20) with double stem (21, 21'), said hub-supports (14, 14') being connected to said stems (21, 21'), said hydraulic cylinder (20) being for operative rotation and interconnection of said steered wheels (13, 13').

5. Tractor (10) according to claim 3 **characterised in that** it comprises two hydraulic cylinders each provided with a respective stem, said hub-supports (14, 14') being connected to said stems, said hydraulic cylinders being for operating said steered wheels (13, 13').

6. Tractor (10) according to claim 4 or 5 **characterised in that** said stems (21, 21') are connected to said hub-supports (14, 14') through rotation pins (25, 25') with substantially vertical axes.

7. Tractor (10) according to claim 3 **characterised in that** it comprises a drag strut (22) connected at a first end to one of said hub-supports (14, 14') and at a second end to said frame (11).

8. Tractor (10) according to claim 7 **characterised in that** said drag strut (22) is connected to said hub-support (14, 14') and to said frame (11) through rotation pins (23, 24) with substantially vertical axes.

9. Tractor (10) according to claim 1 **characterised in that** it comprises a double articulated quadrilateral structure (30) for connecting said front axle (12) with said frame (11), said front axle (12) being interposed between said two articulated quadrilaterals, each articulated quadrilateral comprises two substantially vertical connecting rods (31, 32, 31', 32') and a substantially horizontal rod-shaped element (33) connecting the lower ends of said two connecting rods (31, 32, 31', 32'), said rod-shaped element (33) being symmetrically fixed in the centreline of said front axle (12) and said connecting rods (31, 32, 31', 32') having upper ends connected to said frame (11).

10. Tractor (10) according to claim 9 **characterised in that** said upper ends of said connecting rods (31, 32, 31', 32') are rotatingly connected to said frame (11) along substantially horizontal axes (34, 35).

11. Tractor (10) according to claim 10 **characterised in that** it comprises two substantially horizontal rods (36, 37) for connecting said upper ends of said connecting rods (31, 32, 31', 32'), said two substantially horizontal rods (36, 37) being constrained to said frame (11) and for rotating said two connecting rods (31, 32, 31', 32').

12. Tractor (10) according to claim 3 **characterised in that** it comprises a substantially vertical rod-shaped element (42) for supporting said front axle (12) provided with a lower end fixed in the centreline of said front axle (12), provided for being a first hydrostatic cylinder (40) connected to said axle (12) and to said hub-supports (14, 14'), and a second hydrostatic cylinder (41) connected at a first end to said rod (62) and at the other to said frame (11) and to the upper end of said rod-shaped element (42), and at a second end to said frame (11), said rod-shaped element (42) being constrained in a rotating manner in one of its intermediate portions with respect to said frame (11) through a substantially horizontal pin (43), said first and a second hydrostatic cylinder (40, 41) being operatively connected to determine a rotation of said rod-shaped element (42) upon the steering of said steered wheels (13, 13').

13. Tractor (10) according to claim 3 **characterised in that** it comprises a substantially vertical rod-shaped element (52) for supporting said front axle (12) constrained in a rotating manner in an upper portion thereof with respect to said frame (11) through a substantially horizontal pin (53) and provided with an intermediate portion fixed in the centreline of said front axle (12), provided for being a hydraulic cylinder (50) connected at an end to one of said hub-supports (14, 14') and at a second end to said axle (12), provided for being a strut (51) connected to one of said hub-supports (14, 14') and a lower end of said rod-shaped element (52).

14. Tractor (10) according to claim 3 **characterised in that** said strut (51) is rotatingly connected to one of said hub-supports (14, 14') through a substantially vertical pin (55) and to said rod-shaped element (52) through a substantially horizontal pin (54), determining the movement of said rod (52) with respect to said pin (53).

15. Tractor (10) according to claim 1 **characterised in that** said means for translating said front axle (12) are sequential with respect to said means for steering said steered wheels (13, 13') with respect to said front axle (12) and actuated when a steering angle (α') of said wheels (13, 13') is exceeded with respect to said longitudinal axis (A) of said frame (11).

16. Tractor (10) according to claim 15 **characterised in that** it comprises un hydraulic cylinder (60) connected at an end to one of said hub-supports (14, 14') and at a second end to said frame (11), further provided for being a substantially horizontal rod-shaped element (62) which interconnects said hub-supports (14, 14'), said rod-shaped element (62) being approximately connected in the centreline of said front axle (12) with a cam (61) rotating around a horizontal pin (64), said cam (61) being in lateral contact with a structure (68) for supporting said front axle (12) constrained in a rotating manner in one upper portion thereof with respect to said frame (11) through a substantially horizontal pin (66), said cam (61) being shaped to impart a translation movement of said axle (12) with respect to said structure (68) for supporting said front axle (12) only when said steering angle (α') of said wheels (13, 13') is exceeded with respect to said longitudinal axis (A) of said frame (11).

17. Tractor (10) according to claim 16 **characterised in that** said rod-shaped element (62) is rotatingly connected to one of said hub-supports (14, 14') through a substantially vertical pin (65) and said cam (61) through a substantially horizontal pin (67).

## Patentansprüche

1. Traktor (10) mit einem größeren Lenkwinkel, umfassend ein Gestell (11), eine vordere Lenkachse (12), Mittel zur Verbindung der Vorderachse (12) mit dem Gestell (11), ein Paar gelenkte Räder (13, 13'), die mit den entgegengesetzten Enden der Vorderachse (12) verbunden sind, Mittel zur Lenkung der gelenkten Räder (13, 13') mit Bezug auf die Vorderachse (12) sowie Mittel zur gegenseitigen Verbindung der gelenkten Räder (13, 13'), um deren Drehung zu koppeln, **dadurch gekennzeichnet, dass** die Mittel zur Verbindung der Vorderachse (12) mit dem Gestell (11) Mittel zur Verschiebung der Vorderachse (12) mit Bezug auf das Gestell (11) in eine Richtung (T) umfassen, die rechtwinklig zur Längsachse (A) des Gestells (11) steht.

2. Traktor (10) nach Anspruch 1, **dadurch gekennzeichnet, dass** die gelenkten Räder (13, 13') auf Nabenträgern (14, 14') befestigt sind, die an den entgegengesetzten Enden der Vorderachse (12) angeordnet sind, wobei die Nabenträger (14, 14') auf jeweiligen Bolzen (16, 16') um im Wesentlichen vertikale Achsen (15, 15') durch die Mittel zur Lenkung der gelenkten Räder (13, 13') mit Bezug auf die Vorderachse (12) gedreht werden, wobei die Mittel zur gegenseitigen Verbindung der gelenkten Räder (13, 13') zur wirksamen Verbindung der Nabenträger (14, 14') dienen, um eine gesteuerte Drehung in dieselbe Richtung der gelenkten Räder (13, 13') zu bewirken, wobei die Mittel zur gegenseitigen Verbindung mit einem Lenkrad (17) zum manuellen Führen des Traktors (10) verbunden sind.

3. Traktor (10) nach Anspruch 1, **dadurch gekennzeichnet, dass** die Mittel zur Verschiebung der Vorderachse (12) mit den Mitteln zur Lenkung der gelenkten Räder (13, 13') mit Bezug auf die Vorderachse (12) synchronisiert sind und für jeden Lenkwinkel der gelenkten Räder (13, 13') mit Bezug auf die Längsachse (A) des Gestells (11) betätigt werden.

4. Traktor (10) nach Anspruch 3, **dadurch gekennzeichnet, dass** er einen Hydraulikzylinder (20) mit einem Doppelschaft (21, 21') umfasst, wobei die Nabenträger (14, 14') mit den Schäften (21, 21') verbunden sind, wobei der Hydraulikzylinder (20) zur wirksamen Drehung und gegenseitigen Verbindung der gelenkten Räder (13, 13') dient.

5. Traktor (10) nach Anspruch 3, **dadurch gekennzeichnet, dass** er zwei jeweils mit einem Schaft versehene Hydraulikzylinder umfasst, wobei die Nabenträger (14, 14') mit den Schäften verbunden sind, wobei die Hydraulikzylinder zur Bedienung der gelenkten Räder (13, 13') dienen.

6. Traktor (10) nach Anspruch 4 oder 5, **dadurch gekennzeichnet, dass** die Schäfte (21, 21') mit den Nabenträgern (14, 14') durch Drehbolzen (25, 25') mit im Wesentlichen vertikalen Achsen verbunden sind.

7. Traktor (10) nach Anspruch 3, **dadurch gekennzeichnet, dass** er eine Zugstrebe (22) umfasst, die an einem ersten Ende mit einem der Nabenträger (14, 14') und an einem zweiten Ende mit dem Gestell (11) verbunden ist.

8. Traktor (10) nach Anspruch 7, **dadurch gekennzeichnet, dass** die Zugstrebe (22) mit dem Nabenträger (14, 14') und mit dem Gestell (11) durch Drehbolzen (23, 24) mit im Wesentlichen vertikalen Achsen verbunden ist.

9. Traktor (10) nach Anspruch 1, **dadurch gekennzeichnet, dass** er eine Doppelgelenk-Viereckstruktur (30) für die Verbindung der Vorderachse (12) mit dem Gestell (11) umfasst, wobei die Vorderachse (12) zwischen die beiden Gelenkvierecke gelegt ist und jedes Gelenkviereck zwei im Wesentlichen vertikale Verbindungsstäbe (31, 32, 31', 32') und ein im Wesentlichen horizontales stabförmiges Element (33) umfasst, das die unteren Enden der beiden Verbindungsstäbe (31, 32, 31', 32') verbindet, wobei das stabförmige Element (33) symmetrisch auf der Mittellinie der Vorderachse (12) befestigt ist und die Verbindungsstäbe (31, 32, 31', 32') obere Enden aufweisen, die mit dem Gestell (11) verbunden sind.

10. Traktor (10) nach Anspruch 9, **dadurch gekennzeichnet, dass** die oberen Enden der Verbindungsstäbe (31, 32, 31', 32') drehbar mit dem Gestell (11) entlang von im Wesentlichen horizontalen Achsen (34, 35) verbunden sind.

11. Traktor (10) nach Anspruch 10, **dadurch gekennzeichnet, dass** er zwei im Wesentlichen horizontale Stäbe (36, 37) für die Verbindung der oberen Enden der Verbindungsstäbe (31, 32, 31', 32') umfasst, wobei die zwei im Wesentlichen horizontalen Stäbe (36,37) an das Gestell (11) zur Drehung der beiden Verbindungsstäbe (31, 32, 31', 32') gebunden sind.

12. Traktor (10) nach Anspruch 3, **dadurch gekennzeichnet, dass** er ein im Wesentlichen vertikales, stabförmiges Element (42) zum Tragen der Vorderachse (12) umfasst, die ein unteres Ende aufweist, das auf der Mittellinie der Vorderachse (12) befestigt ist, wobei ein erster hydrostatischer Zylinder (40) vorgesehen ist, der mit der Achse (12) und den Nabenträgern (14, 14') verbunden ist, und ein zweiter hydrostatischer Zylinder (41), der an einem ersten Ende mit dem Stab (62) und an dem anderen Ende mit dem Gestell (11) und dem oberen Ende des stabförmigen Elements (42), und an einem zweiten Ende mit dem Gestell (11) verbunden ist, wobei das stabförmige Element (42) in einem seiner Zwischenabschnitte mit Bezug auf das Gestell (11) durch einen im Wesentlichen horizontalen Bolzen (43) zwangsgedreht wird, wobei der erste und ein zweiter hydrostatische Zylinder (40, 41) wirksam verbunden sind, um eine Drehung des stabförmigen Elements (42) beim Lenken der gelenkten Räder (13, 13')zu bewirken.

13. Traktor (10) nach Anspruch 3, **dadurch gekennzeichnet, dass** er ein im Wesentlichen vertikales, stabförmiges Element (52) zum Tragen der Vorderachse (12) umfasst, die in einem oberen Abschnitt derselben mit Bezug auf das Gestell (11) durch einen im Wesentlichen horizontalen Bolzen (53) zwangsgedreht wird und mit einem Zwischenabschnitt versehen ist, der auf der Mittellinie der Vorderachse (12) befestigt ist, wobei vorgesehen ist, dass ein Hydraulikzylinder (50) an einem Ende mit einem der Nabenträger (14, 14') und an einem zweiten Ende mit der Achse (12) verbunden ist, wobei vorgesehen ist, dass eine Strebe (51) mit einem der Nabenträger (14, 14') und mit einem unteren Ende des stabförmigen Elements (52) verbunden ist.

14. Traktor (10) nach Anspruch 3, **dadurch gekennzeichnet, dass** die Strebe (51) drehbar mit einem der Nabenträger (14, 14') durch einen im Wesentlichen vertikalen Bolzen (55) und mit dem stabförmigen Element (52) durch einen im Wesentlichen horizontalen Bolzen (54) verbunden ist, wodurch die Bewegung des Stabes (52) mit Bezug auf den Bolzen (53) bewirkt wird.

15. Traktor (10) nach Anspruch 1, **dadurch gekennzeichnet, dass** die Mittel zur Verschiebung der Vorderachse (12) sequenziell mit Bezug auf die Mittel zur Lenkung der gelenkten Räder (13, 13') mit Bezug auf die Vorderachse (12) sind und betätigt werden, wenn ein Lenkwinkel (α') der gelenkten Räder (13, 13') mit Bezug auf die Längsachse (A) des Gestells (11) überschritten wird.

16. Traktor (10) nach Anspruch 15, **dadurch gekennzeichnet, dass** er einen Hydraulikzylinder (60) umfasst, der an einem Ende mit einem der Nabenträger (14, 14') und an einem zweiten Ende mit dem Gestell (11) verbunden ist, wobei ferner ein im Wesentlichen horizontales, stabförmiges Element (62) vorgesehen ist, das die Nabenträger (14, 14') miteinander verbindet, wobei das stabförmige Element (62) etwa auf der Mittellinie der Vorderachse (12) mit einer Nocke (61) verbunden ist, die sich um einen horizontalen Bolzen (64) dreht, wobei die Nocke (61) in seitlichem Kontakt mit einer Struktur (68) zum Tragen der Vorderachse (12) steht, die in einem oberen Abschnitt derselben mit Bezug auf das Gestell (11) durch einen im Wesentlichen horizontalen Bolzen (66) zwangsgedreht wird, wobei die Nocke (61) derart geformt ist, dass nur dann eine Verschiebungsbewegung der Achse (12) mit Bezug auf die Struktur (68) zum Tragen der Vorderachse (12) bewirkt wird, wenn der Lenkwinkel (α') der Räder (13, 13') mit Bezug auf die Längsachse (A) des Gestells (11) überschritten wird.

17. Traktor (10) nach Anspruch 16, **dadurch gekennzeichnet, dass** das stabförmige Element (62) drehbar mit einem der Nabenträger (14, 14') durch einen im Wesentlichen vertikalen Bolzen (65) und die Nocke (61) durch einen im Wesentlichen horizontalen Bolzen (67) verbunden ist.

## Revendications

1. Tracteur (10) avec un angle de braquage plus grand, comprenant un châssis (11), un essieu de direction avant (12), des moyens pour connecter ledit essieu avant (12) audit châssis (11), une paire de roues directrices (13, 13') associées à des extrémités opposées dudit essieu avant (12), des moyens pour braquer lesdites roues directrices (13, 13') par rapport audit essieu avant (12) et des moyens d'interconnexion desdites roues directrices (13, 13') pour coupler leur rotation, **caractérisé en ce que** les moyens pour connecter ledit essieu avant (12) audit châssis (11) comprennent des moyens pour faire effectuer une translation audit essieu avant (12) par rapport audit châssis (11) dans une direction (T) orthogonale à l'axe longitudinal (A) dudit châssis (11).

2. Tracteur (10) selon la revendication 1, **caractérisé en ce que** lesdites roues directrices (13, 13') sont montées sur des supports de moyeu (14, 14') disposés à des extrémités opposées dudit essieu avant (12), lesdits supports de moyeu (14, 14') étant commandés en rotation sur des tourillons respectifs (16, 16') autour d'axes sensiblement verticaux (15, 15') par lesdits moyens pour braquer lesdites roues directrices (13, 13') par rapport audit essieu avant (12), lesdits moyens d'interconnexion desdites roues directrices (13, 13') étant prédisposés pour l'interconnexion fonctionnelle desdits supports de moyeu (14, 14') pour produire une rotation contrôlée dans la même direction desdites roues directrices (13, 13'), lesdits moyens d'interconnexion étant connectés à un volant de direction (17) pour guider manuellement ledit tracteur (10).

3. Tracteur (10) selon la revendication 1, **caractérisé en ce que** lesdits moyens pour faire effectuer une translation audit essieu avant (12) sont synchronisés avec lesdits moyens pour braquer lesdites roues directrices (13, 13') par rapport audit essieu avant (12) et actionnés pour chaque angle de direction desdites roues directrices (13, 13') par rapport audit axe longitudinal (A) dudit châssis (11).

4. Tracteur (10) selon la revendication 3, **caractérisé en ce qu'**il comprend un cylindre hydraulique (20) avec double tige (21, 21'), lesdits supports de moyeu (14, 14') étant connectés auxdites tiges (21, 21'), ledit cylindre hydraulique (20) étant prédisposé pour la rotation et l'interconnexion fonctionnelle desdites roues directrices (13, 13').

5. Tracteur (10) selon la revendication 3, **caractérisé en ce qu'**il comprend deux cylindres hydrauliques munis chacun d'une tige respective, lesdits supports de moyeu (14, 14') étant connectés auxdites tiges, lesdits cylindres hydrauliques étant prédisposés pour l'actionnement desdites roues directrices (13, 13').

6. Tracteur (10) selon la revendication 4 ou 5, **caractérisé en ce que** lesdites tiges (21, 21') sont connectées auxdits supports de moyeu (14, 14') par l'intermédiaire de tourillons de rotation (25, 25') avec des axes sensiblement verticaux.

7. Tracteur (10) selon la revendication 3, **caractérisé en ce qu'**il comprend une pièce de réaction (22) connectée à une première extrémité à un desdits supports de moyeu (14, 14') et à une deuxième extrémité audit châssis (11).

8. Tracteur (10) selon la revendication 7, **caractérisé en ce que** ladite pièce de réaction (22) est connectée audit support de moyeu (14, 14') et audit châssis (11) par l'intermédiaire de tourillons de rotation (23, 24) avec des axes sensiblement verticaux.

9. Tracteur (10) selon la revendication 1, **caractérisé en ce qu'**il comprend une structure à doubles quadrilatères articulé (30) pour relier ledit essieu avant (12) avec ledit châssis (11), ledit essieu avant (12) étant interposé entre lesdits deux quadrilatères articulés, chaque quadrilatère articulé comprend deux bielles sensiblement verticales (31, 32, 31', 32'), et un élément en forme de tige sensiblement horizontal (33) reliant les extrémités inférieures desdites deux bielles (31, 32, 31', 32'), ledit élément en forme de tige (33) étant fixé symétriquement au niveau de l'axe longitudinal dudit essieu avant (12) et lesdites bielles (31, 32, 31', 32') ayant des extrémités supérieures connectées audit châssis (11).

10. Tracteur (10) selon la revendication 9, **caractérisé en ce que** lesdites extrémités supérieures desdites bielles (31, 32, 31', 32') sont connectées de manière rotative audit châssis (11) suivant des axes sensiblement horizontaux (34, 35).

11. Tracteur (10) selon la revendication 10, **caractérisé en ce qu'**il comprend deux tiges sensiblement horizontales (36, 37) pour connecter lesdites extrémités supérieures desdites bielles (31, 32, 31', 32'), lesdites deux tiges sensiblement horizontales (36, 37) étant contraintes avec ledit châssis (11), et pour faire pivoter lesdites deux bielles (31, 32, 31', 32').

12. Tracteur (10) selon la revendication 3, **caractérisé en ce qu'**il comprend un élément en forme de tige sensiblement vertical (42) pour supporter ledit essieu avant (12), pourvu d'une extrémité inférieure fixée au niveau de l'axe longitudinal dudit essieu avant (12), prédisposé pour être un premier cylindre hydrostatique (40) connecté audit essieu (12) et auxdits supports de moyeu (14, 14'), et un deuxième cylindre hydrostatique (41) connecté à une première extrémité à ladite tige (62) et à l'autre extrémité audit châssis (11) et à l'extrémité supérieure dudit élément en forme de tige (42), et à une deuxième extrémité audit châssis (11), ledit élément en forme de tige (42) étant contraint de manière rotative dans une de ses portions intermédiaires par rapport audit châssis (11) par l'intermédiaire d'un tourillon sensiblement horizontal (43), lesdits premier et deuxième cylindres hydrostatiques (40, 41) étant connectés fonctionnellement pour déterminer une rotation dudit élément en forme de tige (42) lors du braquage desdites roues directrices (13, 13').

13. Tracteur (10) selon la revendication 3, **caractérisé en ce qu'**il comprend un élément en forme de tige sensiblement vertical (52) pour supporter ledit essieu avant (12) contraint de manière rotative dans une position supérieure de celui-ci par rapport audit châssis (11) par l'intermédiaire d'un tourillon sensiblement horizontal (53) et pourvu d'une portion intermédiaire fixée au niveau de l'axe longitudinal dudit essieu avant (12), prédisposé pour être un cylindre hydraulique (50) connecté à une extrémité à un desdits supports de moyeu (14, 14') et à une deuxième extrémité audit essieu (12), prédisposé pour être un tirant (51) connecté à un desdits supports de moyeu (14, 14') et une extrémité inférieure dudit élément en forme de tige (52).

14. Tracteur (10) selon la revendication 3, **caractérisé en ce que** ledit tirant (51) est connecté de manière rotative à un desdits supports de moyeu (14, 14') par l'intermédiaire d'un tourillon sensiblement vertical (55) et audit élément en forme de tige (52) par l'intermédiaire d'un tourillon sensiblement horizontal (54), déterminant le mouvement de ladite tige (52) par rapport audit tourillon (53).

15. Tracteur (10) selon la revendication 1, **caractérisé en ce que** lesdits moyens pour faire effectuer une translation audit essieu avant (12) sont séquentiels par rapport auxdits moyens pour braquer lesdites roues directrices (13, 13') par rapport audit essieu avant (12) et actionnés quand un angle de braquage (α') desdites roues (13, 13') est dépassé par rapport audit axe longitudinal (A) dudit châssis (11).

16. Tracteur (10) selon la revendication 15, **caractérisé en ce qu'**il comprend un cylindre hydraulique (60) connecté à une extrémité à un desdits supports de moyeu (14, 14') et à une deuxième extrémité audit châssis (11), prédisposé en outre pour être un élément en forme de tige sensiblement horizontal (62) qui interconnecte lesdits supports de moyeu (14, 14'), ledit élément en forme de tige (62) étant connecté approximativement au niveau de l'axe longitudinal dudit essieu avant (12) avec une came (61) tournant autour d'un tourillon horizontal (64), ladite came (61) étant en contact latéral avec une structure (68) pour supporter ledit essieu avant (12) contraint de manière rotative dans une partie supérieure de celui-ci par rapport audit châssis (11) par l'intermédiaire d'un tourillon sensiblement horizontal (66), ladite came (61) étant profilée pour imprimer un mouvement de translation dudit essieu (12) par rapport à ladite structure (68) pour supporter ledit essieu avant (12) seulement quand ledit angle de braquage (α') desdites roues (13, 13') est dépassé par rapport audit axe longitudinal (A) dudit châssis (11).

17. Tracteur (10) selon la revendication 16, **caractérisé en ce que** ledit élément en forme de tige (62) est connecté de manière rotative à un desdits supports de moyeu (14, 14') par l'intermédiaire d'un tourillon sensiblement vertical (65) et à ladite came (61) par l'intermédiaire d'un tourillon sensiblement horizontal (67).
